# EUROPÄISCHE PATENTSCHRIFT

(11) **EP 0 935 542 B1**
(45) Veröffentlichungstag und Bekanntmachung des Hinweises auf die Patenterteilung: **10.10.2001**
(21) Anmeldenummer: 97951884.2
(22) Anmeldetag: 11.11.1997
(51) Int. Cl.: B60R 21/16, B60R 21/00, G10K 11/16

(54) **VORRICHTUNG UND VERFAHREN ZUR VERMEIDUNG VON GEHÖRSCHÄDEN BEI DER AUSLÖSUNG VON FAHRZEUGINSASSEN-RÜCKHALTESYSTEMEN**
DEVICE AND METHOD FOR AVOIDING HEARING DAMAGE DURING ACTIVATION OF VEHICLE OCCUPANT RESTRAINT SYSTEMS
DISPOSITIF ET PROCEDE POUR EVITER DES ATTEINTES AUDITIVES LORS DU DECLENCHEMENT DE SYSTEMES DE RETENUE DES OCCUPANTS D'UN VEHICULE

(30) Priorität: 11.11.1996 DE 29619556 U
(43) Veröffentlichungstag der Anmeldung: 18.08.1999
(73) Patentinhaber: TRW Occupant Restraint Systems GmbH & Co. KG, 73551 Alfdorf (DE)
(72) Erfinder: KAUSCH, Armin, D-73434 Aalen (DE)
(74) Vertreter: Kitzhofer, Thomas, Dipl.-Ing.
(86) Internationale Anmeldenummer: EP9706281
(87) Internationale Veröffentlichungsnummer: WO9821072

(56) Entgegenhaltungen:
- US-A- 3 271 520
- US-A- 3 844 580
- US-A- 4 958 372
- PATENT ABSTRACTS OF JAPAN vol. 016, no. 585 (M-1347), 25.Dezember 1992 -& JP 04 232142 A (ISUZU MOTORS LTD), 20.August 1992,
- DATABASE WPI Section PQ, Week 9530 Derwent Publications Ltd., London, GB; Class P32, AN 95-229583 XP002062895 -& RU 2 024 250 C (INSTR CONSTR BUR)

## Beschreibung

Die Erfindung betrifft eine Vorrichtung und ein Verfahren zur Vermeidung von Gehörschäden, die durch die Auslösung von Fahrzeuginsassen-Rückhaltesystemen entstehen können.

Bei Fahrzeuginsassen-Rückhaltesystemen, zum Beispiel Gassack-Rückhaltesystemen oder Gurtstraffern, sind Gasgeneratoren in Form von pyrotechnischen Gasgeneratoren, Hybridgasgeneratoren oder Druckgasspeicher vorgesehen, bei deren Aktivierung aufgrund der schlagartigen Energiefreisetzung ein Schallereignis in Form eines lauten Knalls auftritt. Bei Gassack-Rückhaltesystemen ist zudem das Entfalten des Gassacks mit einer starken Geräuschentwicklung verbunden. Die dabei auftretenden Schalldruckpegel können so hoch sein, daß es zu Gehörschäden bei Fahrzeuginsassen kommen kann. Da die Schutzwirkung eines Rückhaltesystems unter anderem von der kurzen Aufblaszeit eines Gassacks oder der schnellen Straffung des Gurtes abhängt, mußte bislang aber das Risiko von Gehörschäden in Kauf genommen werden.

Ein solcher Gehörschaden kann ein Knalltrauma, auch akustisches Trauma genannt, oder ein Explosionstrauma sein, wobei beim Aktivieren des Rückhaltesystems, insbesondere eines Gassack-Rückhaltesystems eines der beiden Traumata oder beide Traumata vorkommen können. Nicht bei jedem Auslösen eines Rückhaltesystems kommt es jedoch zu Gehörschäden, vielmehr sind Gehörschäden eher eine Seltenheit. Das Auftreten von Gehörschäden hängt von zahlreichen Faktoren ab, z.B. von der Art des Gasgenerators, dem Gassack, dem Volumen der Fahrgastzelle und von der Konstitution, insbesondere dem Alter des Insassen. Für das Auftreten eines Gehörschadens gibt es deshalb keine exakten Schallpegelgrenzen. Die Erforschung von Schallpegelobergrenzen, ab denen Gehörschäden auftreten, ist sehr schwer, da die Schalldruckpegel von der Art der Meßapparatur stark abhängen. Verallgemeinert läßt sich jedoch sagen, daß der Schalldruckpegel, ab dem es zu einem Gehörschaden kommt, um so höher sein muß, je kürzer die Dauer des auf das Ohr einwirkenden Schallimpulses ist. Ein Knalltrauma tritt in der Regel bei Schallimpulsen bis zu 2 ms Dauer und bei Schalldruckspitzen von über etwa 150 dB auf. Bei einem Knalltrauma kommt es zu Schädigungen des Innenohrbereichs, insbesondere zu Schädigungen der Schnecke aufgrund eines Schallereignisses mit hoher Frequenz. Die Symptome eines Knalltraumas reichen von einem kurzen stechenden Ohrschmerz oder einem sogenannten Tinnitus (andauerndes Pfeifgeräusch im oberen Frequenzbereich) bis zu einer sogenannten Tonsenke, d.h. einem Hörverlust in bestimmten Frequenzbereichen. Letzteres Symptom wird auch Tonschwellenschwund genannt und kann vorübergehender oder bleibender Natur sein (Temporary Threshold Shift oder TTS bzw. Permanent Threshold Shift oder PTS).

Im Gegensatz zum Knalltrauma wird ein Explosionstrauma durch ein Schallereignis mit einer Schalldruckspitze von einer Dauer von mehr als 2 ms und bei einem Schalldruckpegel von mehr als etwa 150 dB verursacht. Ein Explosionstrauma ist häufig mit einem Reißen des Trommelfells und gelegentlich mit einer Luxation der Gehörknöchelchenkette verbunden. Dabei kann es zu einem Hörverlust über den gesamten Frequenzbereich kommen. Ein Explosionstrauma stellt deshalb eine Verletzung des Innenohrs und des Mittelohrs dar. Explosionstraumata werden durch Schallwellen von niedriger Frequenz verursacht.

Beim Auslösen eines Gassack-Rückhaltesystems wird ein etwa 50 ms dauerndes Schallereignis hervorgerufen, wobei das Schallereignis nicht in einem engen Frequenzbereich liegt, sondern ein Schallspektrum ausfüllt. Die maximal auftretenden Schalldruckpegel reichen von etwa 120 bis 165 dB. Das Schallereignis beim Auslösen eines Gassack-Rückhaltesystems beginnt unmittelbar mit dem Öffnen des Gasdruckspeichers, üblicherweise durch Initiieren einer pyrotechnischen Zündladung. Das Ausströmen von Gas aus dem Gasgenerator bei hoher Austrittsgeschwindigkeit sowie das Entfalten des Gassacks selbst erzeugen Schallwellen mit hohem Schalldruckpegel, wobei die Schalldruckspitzen meist zu Beginn des Schallereignisses auftreten. Die Frequenzen von unterhalb 300 Hz sind nach dem derzeitigen Stand der Forschung für eine Trommelfellschädigung und die Frequenzen oberhalb von 300 Hz für eine Innenohrschädigung verantwortlich.

Aus der JP-A-04232142 ist eine Vorrichtung zur Vermeidung von Gehörschäden beim Auslösen von Airbags bekannt. Hierzu sind ein Lautsprecher, ein nahe des Kopfes des Fahrzeuginsassen angeordnetes Mikrophon, und eine Steuereinrichtung vorgesehen. Der Lautsprecher wird so angesteuert, daß sich die Schallwellen, die beim Auslösen des Airbags entstehen und die Schallwellen des aktivierten Lautsprechers im Bereich des Mikrophons nahe der Ohren des Insassen gegenseitig aufheben. Damit soll der auf das Gehör wirkende Schalldruckpegel reduziert werden.

Aus der US-A-3 271 520 ist ein militärisches Gerät bekannt, das an den Auslöser einer Waffe gekoppelt ist. Auf das Auslösen der Waffe hin wird zuerst ein Schallereignis erzeugt, welches den sogenannten Stapediusreflex im menschlichen Ohr auslöst. Zeitverzögert hierzu wird die Waffe ausgelöst. Das Schallereignis ist entweder ein kontinuierlicher, länger andauernder Schallimpuls oder ein einzelner Schallimpuls, welcher in Kopfhörern erzeugt wird, die der Schütze trägt.

Die Erfindung schafft eine Vorrichtung und ein Verfahren zur Vermeidung von durch die Auslösung von Fahrzeuginsassen-Rückhaltesystemen verursachten Gehörschäden, insbesondere von Schädigungen des Innenohrbereichs.

Die erfindungsgemäße Vorrichtung umfaßt eine Schallquelle zum Hervorrufen eines primären Schallereignisses, das einen nicht gehörschädigenden Schalldruckpegel aufweist, der aber zur Auslösung des akustischen Reflexes des menschlichen Ohres ausreicht, und eine Auslösesteuerung für die Schallquelle. Die Auslösesteuerung steuert die Schallquelle im Rückhaltefall so an, daß diese das primäre Schallereignis zeitlich kurz vor dem Auftreffen eines sekundären Schallereignisses hervorruft, welches bei der Auslösung des Rückhaltesystems auftritt und einen gehörgefährdenden Schalldruckpegel aufweist. Der Zeitabstand zwischen den Schallereignissen einerseits und der Schallpegel des primären Schallereignisses andererseits sind so bemessen, daß einer Gehörschädigung als Folge des sekundären Schallereignisses vorgebeugt wird.

Das erfindungsgemäße Verfahren sieht vor, ein primäres Schallereignis hervorzurufen, das einen nicht gehörschädigenden Schalldruckpegel aufweist, der aber zur Auslösung des akustischen Reflexes des menschlichen Ohres ausreichend hoch ist. Das primäre Schallereignis wird ferner so kurz vor dem Auftreten des sekundären Schallereignisses hervorgerufen, welches bei der Auslösung des Rückhaltesystems auftritt und einen gehörgefährdenden Schalldruckpegel aufweist, daß der akustische Reflex ausgelöst wird und dadurch einer Gehörschädigung als Folge des sekundären Schallereignisses vorgebeugt wird.

Die erfindungsgemäße Vorrichtung und das erfindungsgemäße Verfahren nützen den einen Schutzreflex bildenden akustischen Reflex des menschlichen Ohres aus, das bei Einwirkung von hohen Schalldrücken sofort seine Empfindlichkeit herabsetzt, so daß darauffolgende Schallereignisse mit gleichem oder höherem Schalldruck nur einen Bruchteil der negativen Auswirkungen des primären Schallereignisses auf das Innenohr haben. Das sekundäre Schallereignis hat dadurch eine geringere physiologische Auswirkung, so daß es zu keinen Schäden im Innenohr, wie zum Beispiel Knalltraumata, kommen kann.

Der akustische Reflex (Stapediusreflex) kommt durch Kontraktion eines Muskels im Innenohrbereich zustande. Dadurch wird die Gehörknöchelchenkette versteift und der Schalldruck um ca. 5 dB gesenkt. Der Stapediusreflex wird ab einem Schalldruckpegel von etwa 70 dB hervorgerufen, wobei die Reizschwelle zur Auslösung des Reflexes bei einem Dauerlärm höher liegt. Abgestimmt auf den in einem Fahrzeug üblicherweise herrschenden Lärmpegel kann die Schallquelle ein primäres Schallereignis mit einem Schalldruckpegel im Bereich von etwa 70 bis etwa 140 dB hervorrufen, um den akustischen Reflex auszulösen.

Durch die erfindungsgemäße Vorrichtung ist es z.B. möglich, Gasgeneratoren näher am Kopf des Fahrzeuginsassen im Fahrzeug einzubauen.

Vorzugsweise sollte jedoch der Schalldruckpegel des primären Schallereignisses mindestens etwa 100 dB, vorzugsweise mehr als etwa 110 dB betragen. Da die sogenannte Latenzzeit des akustischen Reflexes, d.h. die Zeit zwischen dem den Reflex auslösenden Schallereignis bis zur Impedanzänderung aufgrund des Reflexes, mit einem primären Schallereignis von höherem Schalldruckpegel abnimmt, sind Schallereignisse relativ knapp unterhalb der Grenze zur Gehörschädigung am geeignetsten, innerhalb kürzester Zeit den akustischen Reflex auszulösen.

Das den akustischen Reflex auslösende primäre Schallereignis beginnt etwa 0,5 bis etwa 30 ms vor dem sekundären Schallereignis. Der optimale Abstand zwischen dem Beginn des primären und dem Beginn des sekundären Schallereignisses hängt vom Schalldruckpegel des primären Schallereignisses aufgrund der oben beschriebenen Wechselwirkung zwischen der Höhe des Schalldruckpegels und der Latenzzeit des akustischen Reflexes ab. Die Latenzzeit des akustischen Reflexes reicht von etwa 0,5 bis über 150 ms, wobei aber, abhängig vom Fahrzeug, allenfalls etwa 30 ms Zeit vor dem Auslösen des Rückhaltesystems vorhanden ist, um das primäre Schallereignis hervorzurufen. Vorzugsweise beginnt das primäre Schallereignis deshalb etwa 5 bis etwa 15 ms vor dem sekundären Schallereignis. Sichergestellt sein muß stets, daß der Schalldruckpegel und der zeitliche Abstand des Beginns des primären Schallereignisses vom Beginn des sekundären Schallereignisses so aufeinander abgestimmt sind, daß die Latenzzeit eines Insassen mit normaler Gehörfunktion kürzer als der zeitliche Abstand zwischen dem Beginn der beiden Schallereignisse ist.

Das primäre Schallereignis sollte ein Frequenzspektrum im Bereich von etwa 500 bis etwa 8000 Hz aufweisen, vorzugsweise im Bereich von etwa 2000 bis etwa 4000 Hz liegen. In letzterem Bereich ist das menschliche Ohr am empfindlichsten, d.h. eine Schallwelle mit einem relativ niedrigen Schalldruckpegel wird bereits wahrgenommen. Bei der bevorzugten Ausführungsform ruft die Schallquelle ein Schallereignis mit einer Frequenz von etwa 3500 Hz hervor. Wenn das primäre Schallereignis durch die schlagartige Freisetzung der Energie eines Energiespeichers, z.B. eines pyrotechnischen Materials, hervorgerufen wird, werden Schallwellen eines gesamten Spektrums erzeugt, so daß der Frequenzbereich, in dem die erzeugten Schallwellen ausschließlich liegen sollen, nicht begrenzt werden kann. Bei der Erzeugung von Schallwellen durch einen Lautsprecher hingegen lassen sich Schallereignisse in engen Frequenzbereichen oder mit einer exakten Frequenz erzeugen.

Das primäre Schallereignis dauert vorzugsweise maximal etwa 2 ms. Da es einen Schalldruckpegel relativ knapp unterhalb der Grenze zur Gehörschädigung aufweist, müssen Verletzungen des Gehörs durch das primäre Schallereignis ausgeschlossen werden. Durch Vorsehen eines relativ kurzen primären Schallereignisses kann mit relativ hoher Wahrscheinlichkeit das Auftreten eines oben bereits beschriebenen Explosionstraumas ausgeschlossen werden, welches insbesondere bei Schallereignissen mit einer Dauer von mehr als 2 ms auftritt.

Das primäre Schallereignis kann ein kurzes, einmaliges Ereignis in Form eines für das menschliche Ohr akustisch wahrnehmbaren Geräusches sein oder die Folge von mehreren, aufeinanderfolgenden Einzelgeräuschen, von denen das primäre Geräusch vor dem sekundären Schallereignis beginnt.

Die Schallquelle umfaßt gemäß einer Ausführungsform einen Energiespeicher, der zum Beispiel ein Druckgasspeicher ist oder pyrotechnisches Material enthält. Die schlagartige Freisetzung der Energie sorgt für das primäre Schallereignis. Alternativ kann die Schallquelle auch einen Lautsprecher aufweisen, zum Beispiel einen piezoelektrischen Lautsprecher, mittels dem relativ länger andauernde Schallereignisse hervorgerufen werden können.

Die Auslösesteuerung weist vorzugsweise einen Unfallsensor auf, auf dessen Signal hin im Rückhaltefall das primäre Schallereignis hervorgerufen wird, sowie bei der bevorzugten Ausführungsform eine mit dem Unfallsensor verbundene Steuereinheit. Die Steuereinheit ist dabei so ausgebildet, daß sie in einem vorbestimmten zeitlichen Abstand nach Erhalt eines Signals vom Unfallsensor ein Signal zum Auslösen des primären Schallereignisses an die Schallquelle abgibt. Der Unfallsensor kann ein Verzögerungssensor zur Ermittlung der Fahrzeugverzögerung oder ein taktiler Sensor sein, wie er beispielsweise zur Auslösung von Seitengassäcken verwendet wird und der die Deformation am Fahrzeug bei einem Unfall erfaßt. Darüber hinaus können der Unfallsensor und die Steuereinheit so ausgebildet sein, daß sie einen nicht mehr vermeidbaren Unfall feststellen können, indem z.B. ein Abstandssensor vorgesehen ist, der den Abstand zu Objekten relativ zum Fahrzeug erfassen kann. Die Steuereinheit errechnet dann z.B. aufgrund der aktuellen Fahrzeuggeschwindigkeit, ob dem sich relativ zum Fahrzeug nähernden Objekt noch ausgewichen werden kann. Auf diese Weise ist es möglich, den Zeitpunkt des Auslösens des primären Schallereignisses sogar noch vor dem Beginn einer Kollision zu legen. Dies kann beispielsweise bei einem Kleinwagen notwendig sein, bei dem der zeitliche Abstand zwischen der ersten Deformation des Fahrzeugs und dem Auslösen des Rückhaltesystems sowie dem damit verbundenen Hervorrufen des sekundären Schallereignisses so klein ist, daß selbst bei sofortiger Auslösung des primären Schallereignisses zu Beginn einer Fahrzeugberührung im Falle eines Frontalaufpralls nicht genügend Zeit für das menschliche Ohr zur Verfügung stünde, um den akustischen Reflex vollständig auszulösen.

Die erfindungsgemäße Vorrichtung kann als separate Baugruppe ausgebildet sein und gegebenenfalls in bestehende Fahrzeuge mit Rückhaltesystemen nachgerüstet werden. Die Vorrichtung weist eine vollständige, eigene Auslösesteuerung, einen gemeinsamen Verzögerungssensor oder sogar eine gemeinsame Steuereinheit mit dem Fahrzeuginsassen-Rückhaltesystem auf. Mit einer gemeinsamen Steuereinheit läßt sich die zeitliche Aufeinanderfolge des primären und des sekundären Schallereignisses noch einfacher und genauer steuern.

Da der erforderliche Bauraum für die erfindungsgemäße Vorrichtung gering ist, ist es auch möglich, sie in ein Rückhaltesystem zu integrieren.

Die Erfindung schafft ferner ein Gassack-Rückhaltesystem für Fahrzeuginsassen, mit einem Gassack, einem Gasgenerator und einer Auslösesteuerung, die einen Verzögerungssensor und eine Steuereinheit umfaßt. Die zuvor beschriebene erfindungsgemäße Vorrichtung zur Vermeidung von Gehörschäden, die durch die Auslösung des Fahrzeuginsassen-Rückhaltesystems entstehen können, ist dabei in das Gassack-Rückhaltesystem integriert.

Zudem ist vorzugsweise eine gemeinsame Auslösesteuerung zur Aktivierung des Gasgenerators und zur Auslösung des primären Schallereignisses vorgesehen.

Das Gassack-Rückhaltesystem kann in Modulbauweise ausgeführt sein, wodurch das Gassack-Modul vormontiert in ein Fahrzeug eingebaut wird. Die Schallquelle der Vorrichtung zur Vermeidung von Gehörschäden umfaßt in diesem Fall einen Energiespeicher, dessen Energie schlagartig freigesetzt wird, um für das primäre Schallereignis zu sorgen. Wenigstens dieser Energiespeicher bildet zusammen mit dem Modul, in das er integriert ist, eine komplette, vormontierte Einheit.

Gemäß einer weiteren Ausführungsform ist wenigstens der Energiespeicher der Vorrichtung in den Gasgenerator des Gassack-Rückhaltesystems integriert.

Weitere Merkmale und Vorteile der Erfindung ergeben sich aus der nachfolgenden Beschreibung mehrerer bevorzugter Ausführungsformen und aus den nachfolgenden Zeichnungen, auf die Bezug genommen wird.

In den Zeichnungen zeigen:
- Figur 1 eine vereinfachte Darstellung einer ersten Ausführungsform der erfindungsgemäßen Vorrichtung, bei der diese als vom Fahrzeuginassen-Rückhaltesystem getrennte Baugruppe ausgebildet ist und die nach dem erfindungsgemäßen Verfahren arbeitet;
- Figuren 2a bis 2d verschiedene Ausführungsformen der bei der erfindungsgemäßen Vorrichtung vorgesehenen Schallquelle;
- Figuren 3a bis 3c verschiedene Auführungsformen der bei der erfindungsgemäßen Vorrichtung vorgesehenen Unfallsensoren;
- Figur 4 eine zweite Ausführungsform der erfindungsgemäßen Vorrichtung, bei der diese an ein Fahrzeuginsassen-Rückhaltesystem in Form eines Gassack-Rückhaltesystems oder eines Gurtstraffersystems gekoppelt ist;
- Figur 5 eine dritte Ausführungsform der erfindungsgemäßen Vorrichtung, bei der diese ebenfalls an ein erfindungsgemäßes Gassack-Rückhaltesystem gekoppelt ist;
- Figur 6 eine vierte Ausführungsform der erfindungsgemäßen Vorrichtung, bei der diese in ein Gassack-Modul integriert ist;
- Figur 7 das erfindungsgemäße Gassack-Rückhaltesystem, bei dem die Schallquelle der erfindungsgemäßen Vorrichtung in den Gasgenerator des Gassack-Rückhaltesystems integriert ist; und
- Figur 8 eine weitere Ausführungsform des erfindungsgemäßen Gassack-Rückhaltesystems.

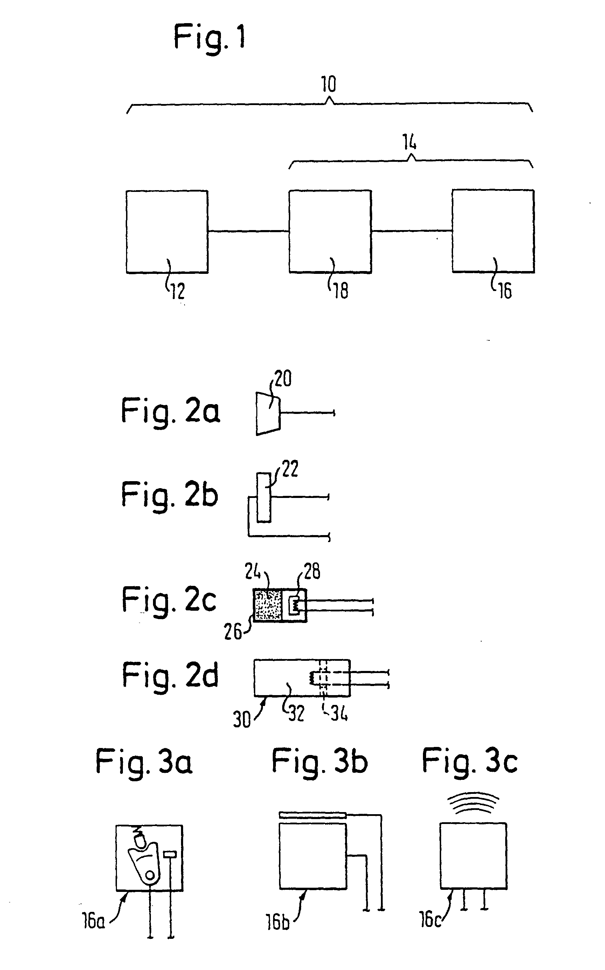

In Figur 1 ist eine Vorrichtung 10 zur Vermeidung von Gehörschäden stark vereinfacht dargestellt, die durch die Auslösung eines nicht gezeigten Fahrzeuginsassen-Rückhaltesystems, zum Beispiel eines Gassack-Rückhaltesystems oder eines Gurtstraffersystems, entstehen können. Die Vorrichtung 10 umfaßt eine Schallquelle 12 und eine Auslösesteuerung 14 für die Schallquelle 12. Die Auslösesteuerung 14 wiederum weist einen Unfallsensor 16 und eine damit verbundene Steuereinheit 18, an die die Schallquelle 12 angeschlossen ist, auf.

Die Schallquelle 12 kann verschieden ausgeführt sein, wie anhand der Figuren 2a bis 2d dargestellt ist. Es ist möglich, die Schallquelle 12 als üblichen Lautsprecher 20 (vgl. Figur 2a) oder als piezoelektrischen Lautsprecher 22 (vgl. Figur 2b) auszuführen. Darüber hinaus kann ein von der Schallquelle hervorzurufendes Schallereignis auch durch Zünden von pyrotechnischem Material 24, das in einem Gehäuse 26 untergebracht ist (vgl. Figur 2c), hervorgerufen werden. In das Gehäuse 26 ragt dabei ein mit der Steuereinheit 18 verbundener Zünder 28. Die Schallquelle 12 ist bei der in Figur 2c gezeigten Ausführungsform wie ein leistungsschwacher Gasgenerator für Fahrzeuginsassen-Rückhaltesysteme aufgebaut. Gemäß Figur 2d ist die Schallquelle 12 als Druckgasquelle 30 mit einer mit Druckgas gefüllten Kammer 32 ausgeführt. Im Rückhaltefall wird eine Öffnung in einer Wandung 34 der Druckgasquelle freigelegt, durch die das Druckgas austritt und dabei ein Schallereignis hervorruft. Das Schallereignis kann auch dadurch ausgelöst werden, daß beispielsweise in der Kammer 32 befindliches Knallgas gezündet wird und aufgrund des hohen Kammerinnendrucks die Wandung 34 an vorbestimmten Stellen aufbricht und das Gas unter hohem Druck nach außen strömt und dabei ein Schallereignis hervorruft. Wie bei der in Figur 2c gezeigten Ausführungsform ist auch der Druckgasspeicher 30 gemäß Figur 2d wie ein bislang üblicher, bei Fahrzeuginsassen-Rückhaltesystemen verwendeter Gasgenerator aufgebaut, der lediglich eine sehr geringe Leistung aufweist. Während die Schallquellen gemäß den Figuren 2a und 2b ein länger andauerndes Schallereignis oder mehrere, aufeinanderfolgende Schallereignisse hervorrufen können, sind die in Figur 2c und 2d dargestellten Schallquellen nur in der Lage, ein kurzes Schallereignis auszulösen, da sie aus einem Energiespeicher bestehen, dessen Energie schlagartig freigesetzt wird und dabei Schallwellen erzeugt.

In den Figuren 3a bis 3c sind verschiedene Ausführungsformen des bei der erfindungsgemäßen Vorrichtung vorgesehenen Unfallsensors dargestellt. Der Sensor kann demnach ein Verzögerungssensor 16a (Figur 3a), ein taktiler Sensor 16b (Figur 3b) oder ein Abstandssensor 16c (Figur 3c) sein. Beim Verzögerungssensor 16a schließt beispielsweise ein drehbar gelagertes Teil, das in einem Rückhaltefall aus seiner Grundstellung schwenkt, einen Stromkreis. Beim taktilen Sensor 16b sind zwei geringfügig voneinander beabstandete Platten vorgesehen, die beispielsweise in der Lagerung der Stoßfänger vorgesehen sind und bei geringfügiger Deformation einander berühren, so daß ein Stromkreis geschlossen wird. Der Abstandssensor 16c gemäß Figur 3c sendet in regelmäßigen Abständen Impulse aus, die von einem Objekt, z.B. einem sich relativ zum Fahrzeug nähernden Gegenstand reflektiert und vom Sensor wieder erfaßt werden. Die entsprechenden Signale werden von der Steuereinheit 18 ausgewertet, um den Abstand und die Geschwindigkeit des sich relativ auf das Fahrzeug zubewegenden Objekts zu bestimmen und daraus Rückschlüsse zu ziehen, ob ein Unfall stattfinden wird. Der Abstandssensor 16c kommuniziert deshalb ständig mit der Steuereinheit 18.

Die in Figur 1 gezeigte Vorrichtung 10 ist in ein mit einem Fahrzeuginsassen-Rückhaltesystem ausgestattetes Fahrzeug eingebaut. Unabhängig davon, ob das Fahrzeuginsassen-Rückhaltesystem mit einem pyrotechnischen Gasgenerator, einem Hybridgasgenerator oder einem Druckgasspeicher arbeitet, entsteht beim Auslösen des Fahrzeuginsassen-Rückhaltesystems ein lauter Knall, dessen Schalldruckpegel zu Gehörschäden bei den Fahrzeuginassen unter anderem im Innenohrbereich führen kann. Die in Figur 1 gezeigte Vorrichtung 10 vermeidet derartige Gehörschäden, indem sie den akustischen Reflex des Ohres ausnutzt. Dieses senkt nämlich nach Einwirkung eines Schallereignisses mit hohem Schalldruck seine Empfindlichkeit, so daß ein nachfolgendes Schallereignis geringere physiologische Auswirkungen auf das Ohr, vor allem das Innenohr, hat, selbst wenn das sekundäre Schallereignis einen höheren Schalldruckpegel als das primäre Schallereignis aufweisen sollte.

Im Rückhaltefall, ab Erreichen eines vorbestimmten Fahrzeugverzögerungswertes, erzeugt bei Einsatz des Verzögerungssensors 16a gemäß Figur 3a, der als mechanischer, elektromechanischer oder elektrischer Verzögerungssensor ausgebildet sein kann, dieser ein Signal, das an die Steuereinheit 18 weitergegeben wird. Diese verarbeitet das Signal und betätigt mit einer vorbestimmten Zeitverzögerung die Schallquelle 12. Je nachdem, wie die Schallquelle 12 ausgeführt ist, wird ein mehr oder weniger langes, primäres Schallereignis hervorgerufen, dessen Schalldruckpegel ausreichend hoch ist, um den akustischen Reflex auszulösen, aber nicht so hoch ist, daß es zu Gehörschäden führen kann. Dis primäre Schallereignis dauert weniger als 2 ms, erreicht einen Schalldruckpegel von mindestens etwa 100 dB und liegt vorzugsweise im Bereich von 110 bis 140 dB. Bei Verwendung eines Lautsprechers 20, 22 als Schallquelle 12 kann die Frequenz des primären Schallereignisses in engen Grenzen vorbestimmt werden. Dabei liegt das Frequenzspektrum des primären Schallereignisses vorzugsweise im Bereich von etwa 2000 bis etwa 4000 Hz, wobei eine besonders große Empfindlichkeit des Ohres zur Auslösung des akustischen Reflexes bei Schallereignissen bei etwa 3500 Hz liegt. Bei Verwendung eines Energiespeichers, wie er in den Figuren 2c und 2d dargestellt ist, wird ein Schallereignis, das ein gesamten Schallspektrum abdeckt, hervorgerufen. Die Steuereinheit 18 steuert die Schallquelle 12 so rechtzeitig an, daß das primäre Schallereignis kurz vor dem sekundären Schallereignis, welches bei der Zündung des vorgesehenen Gasgenerators ausgelöst wird, auftritt. Der minimale zeitliche Versatz zwischen dem Beginn des primären und dem des sekundären Schallereignisses sollte im Bereich von etwa 5 bis 15 ms liegen, also groß genug sein, um die Schutzwirkung durch den akustischen Reflex im menschlichen Ohr auszulösen.

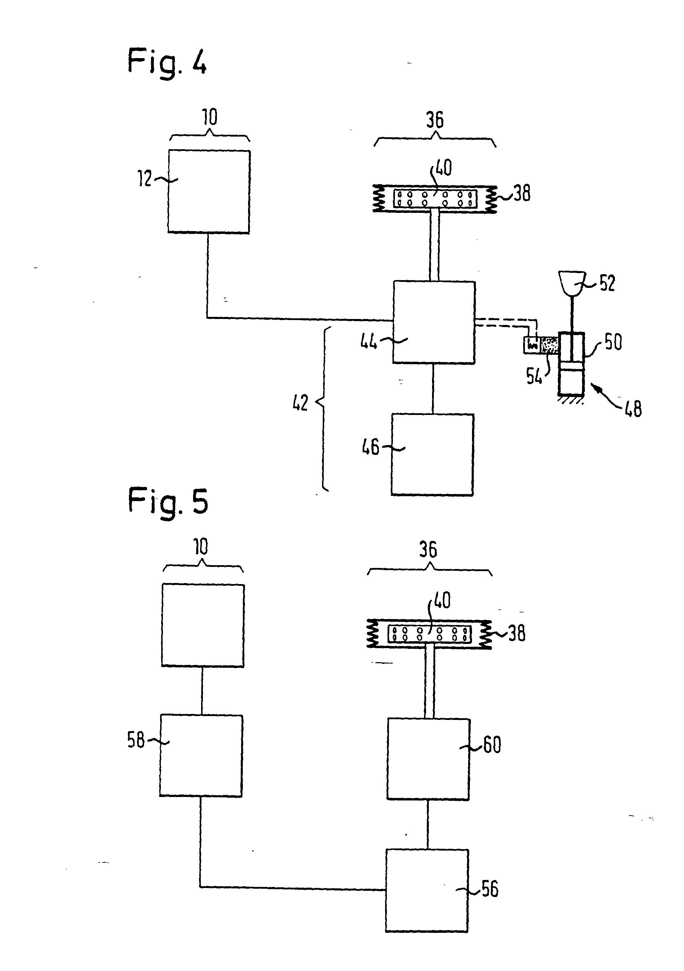

Die in Figur 1 dargestellte Vorrichtung 10 ist als separate Baugruppe ausgeführt, die auch in ein mit einem Rückhaltesystem ausgestattetes Fahrzeug nachträglich eingebaut werden kann. Die zeitliche Aufeinanderfolge des primären und sekundären Schallereignisses kann jedoch dann besser gesteuert werden, wenn die Vorrichtung in ein Fahrzeuginsassen-Rückhaltesystem integriert ist oder einen Teil desselben bildet, wie es in den Figuren 4 bis 8 dargestellt ist.

Bei der Ausführungsform nach Figur 4 ist die Vorrichtung 10 mit einem Gassack-Rückhaltesystem 36 gekoppelt, welches einen gefalteten Gassack 38 und einen in dessen Innerem angeordneten Gasgenerator 40 umfaßt. Die Auslösung des Gasgenerators 40 erfolgt über eine Auslösesteuerung 42, die durch eine Steuereinheit 44 und einen Verzögerungssensor 46 gebildet ist. Die Auslösesteuerung 42 stellt eine gemeinsame Steuerung für die Vorrichtung 10 und das Gassack-Rückhaltesystem 36 dar. Im Kollisionsfall gibt die Steuereinheit 44 nach Eingang eines entsprechenden Signals vom Verzögerungssensor 46 zuerst ein Signal an die Schallquelle 12 und, zeitlich kurz verzögert hierzu, ein sekundäres Signal an den Gasgenerator 40 ab, so daß die Schallquelle 12 kurz vor dem Zünden des Gasgenerators 40 und dem damit einhergehenden sekundären Schallereignis für ein primäres Schallereignis sorgt.

Anstatt mit der Auslösesteuerung 42 eines Gassack-Rückhaltesystems 36 gekoppelt zu sein, kann die Vorrichtung 10 auch zum Vermeiden eines Gehörschadens, der beim Auslösen eines Gurtstraffersystems 48 möglicherweise auftritt, eingesetzt werden, wie es in Figur 4 ebenfalls dargestellt ist. Beim Auslösen eines Gurtstraffersystems sind Gehörschäden zwar bislang nicht bekannt geworden, jedoch kann das daran liegen, daß bislang Gasgeneratoren nicht in der Nähe des Kopfes des Insassen angeordnet ist. Es sind aber Gurtstraffersysteme denkbar, bei denen es vorteilhaft wäre, den Gasgenerator in Kopfnähe anzuordnen. Für diesen Fall könnten die Schalldruckpegel hoch genug sein, um zu Gehörschäden, auch im Innenohrbereich, zu führen, so daß es vorteilhaft ist, die Vorrichtung 10 vorzusehen. Das Gurtstraffersystem 48 besteht unter anderem aus einer Kolben-Zylinder-Einheit 50, wobei der Kolben mit einem Gurtschloß 52 verbunden ist. Pyrotechnisches Treibmaterial 54 wird durch die Auslösesteuerung 42 zeitlich geringfügig nach dem primären Schallereignis gezündet, so daß auch der hohe Schalldruckpegel beim Auslösen des Gurtstraffersystems 48 nicht zu Gehörschäden führen kann.

Die in Figur 4 gezeigte Anordnung kann jedoch auch so modifiziert werden, daß die Auslösesteuerung 42 sowohl mit dem Gurtstraffersystem 48 als auch mit dem Gassack-Rückhaltesystem 36 gekoppelt ist. Da das Gurtstraffersystem 48 üblicherweise zeitlich vor dem Gassack-Rückhaltesystem 36 aktiviert wird, kann der Gasgenerator des Gurtstraffersystems 48 als Schallquelle verwendet werden, indem das pyrotechnische Treibmaterial 54 zeitlich ausreichend vor dem Aktivieren des Gasgenerators 40 des Gassack-Rückhaltesystems 36 gezündet wird. In diesem Fall kann die separate Schallquelle 12 entfallen.

Die in Figur 5 dargestellte Ausführungsform unterscheidet sich von der in Figur 4 dargestellten lediglich dadurch, daß die Vorrichtung 10 und das Gassack-Rückhaltesystem 36 durch einen gemeinsamen Verzögerungssensor 56 miteinander gekoppelt sind. Anstatt einer gemeinsamen Steuereinheit 44 sind jedoch zwei getrennte Steuereinheiten 58 und 60 für die Vorrichtung 10 bzw. das Gassack-Rückhaltesystem 36 vorgesehen.

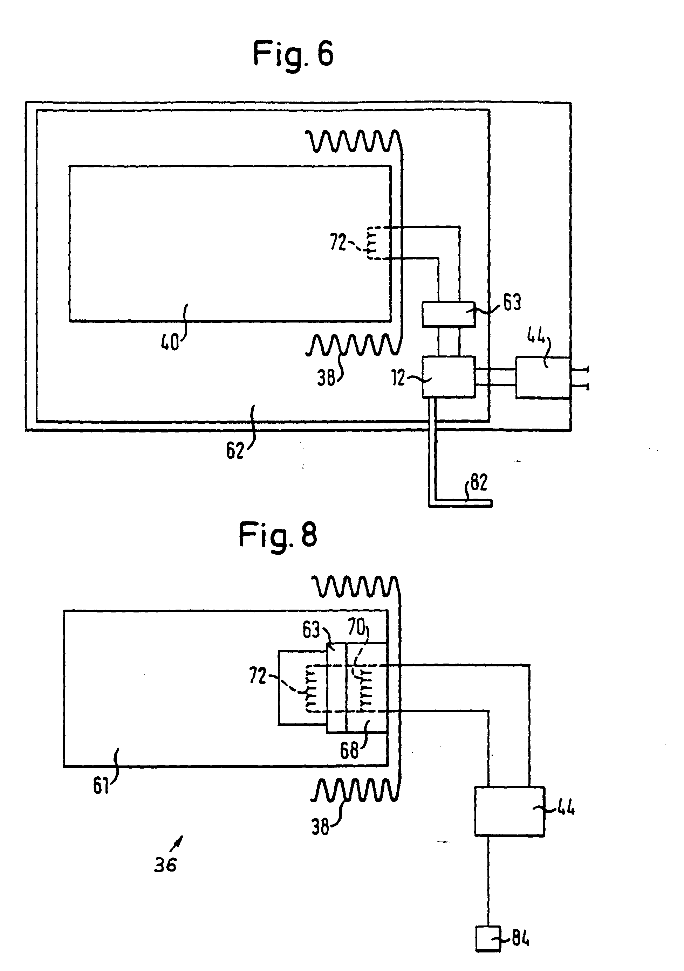

Da die Vorrichtung 10 sehr klein baut, kann sie in ein Gassack-Modul integriert sein, wie es in Figur 6 dargestellt ist. Ein Gassack-Modul weist beispielsweise eine vormontierte Einheit aus Gasgenerator 61 und Gassack 38 auf, wie sie in Figur 6 dargestellt ist. Die Schallquelle 12 ist hierzu an einer Grundplatte 62 als Teil des Moduls befestigt, an der auch der Gasgenerator 40 und der Gassack 38 fixiert sind und die zur Befestigung des Gassack-Moduls mit der Schallquelle 12 an einer Lenkradnabe (nicht gezeigt) dient. Zwischen der Schallquelle 12 und einem in das Innere des Gasgenerator 40 ragenden Zünder 72 ist ein Zündverzögerungselement 63 angeordnet. Das Signal zur Erzeugung des primären Schallereignisses, das zur Schallquelle 12 geleitet wird, gelangt von dieser zum Zündverzögerungselement 63 und von dort zum Zünder 72, so daß der Beginn des primären Schallereignisses einen vorbestimmten zeitlichen Abstand zum Beginn des sekundären Schallereignisses aufweist. Das Zündverzögerungselement 63 kann beispielsweise als Kondensator ausgeführt sein. Die in Figur 6 gezeigte Anordnung ist insbesondere schaltungstechnisch sehr einfach aufgebaut.

Auch bei dieser Ausführungsform wird das primäre Schallereignis durch Zünden eines pyrotechnischen Materials hervorgerufen, so daß die Schallquelle 12 als Gasgenerator ausgebildet ist. Das beim Zünden des in der Schallquelle 12 befindlichen Materials erzeugte Gas kann dazu verwendet werden, das Aktivieren des Gassack-Rückhaltesystems vorzubereiten. Hierzu wird das erzeugte Gas in eine Positioniereinrichtung 82, z.B. in Form eines zusammengefalteten Schlauches, geleitet. Der Schlauch ist so im Fahrzeug angeordnet, daß er in aufgeblasenem Zustand eine Gassackabdeckung öffnet, wodurch die Entfaltung des Gassacks 38 schneller erfolgen kann. Ferner kann der Schlauch 82 als Spannband ausgestaltet sein, welches den gefalteten Gassack 38 positioniert und dadurch ebenfalls ein schnelleres Entfalten des Gassacks 38 ermöglicht. Das Positionieren des Gassacks 38 ist insbesondere bei seiner Ausbildung als Seitengassack, der extrem schnell entfaltet werden muß, vorteilhaft, z.B. bei einem Kopf-Seitengassack, der sich von den A-Säule bis zur C-Säule erstreckt. Ist ein zentrales Gasversorgungssystem (nicht gezeigt) im Fahrzeug vorgesehen, kann die Positioniereinrichtung 82 auch die Zufuhr des Gases zum Gassack 38 vorbereiten oder eine entsprechende Schaltvorrichtung zur Freigabe des Gases betätigen. In diesem Fall würde der Zünder 72 sowie das Zündverzögerungselement 63 entfallen. Anstatt dessen würde eine Gasleitung direkt in das Innere des Gassacks 38 führen.

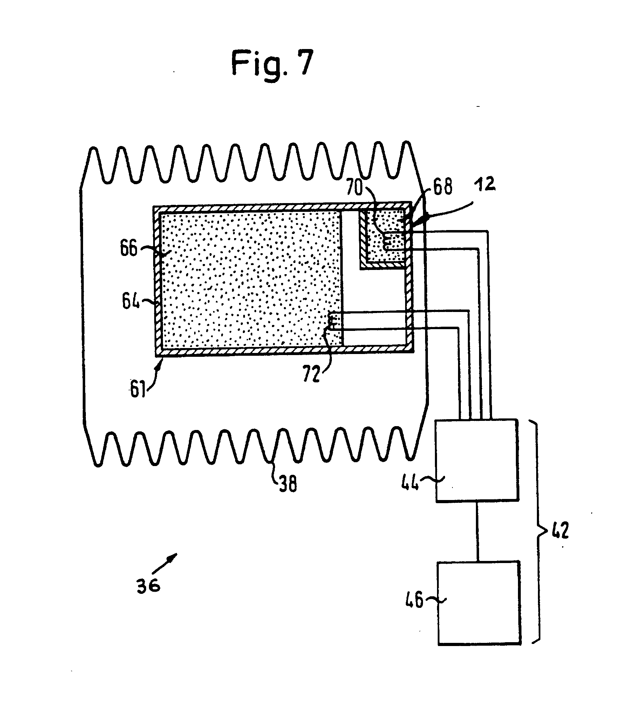

Bei der in Figur 7 dargestellten Ausführungsform ist die Schallquelle 12 sogar in den Gasgenerator 61 eines Gassack-Rückhaltesystems 36 integriert. Das Innere eines Gehäuses 64 umfaßt zwei Kammern, wobei die erste Kammer 66 mit pyrotechnischem Material gefüllt ist, das auf seine Zündung hin Gas zum Entfalten eines Gassacks 38 erzeugt. Die zweite, wesentlich kleinere und ebenfalls mit pyrotechnischem Material gefüllte Kammer 68 dient als Schallquelle 12. Zwei getrennte Zünder 70, 72 für die Kammern 66, 68 werden von der Steuereinheit 44 zeitlich nacheinander aktiviert, so daß zuerst das pyrotechnische Material in der Kammer 68 gezündet wird, aus der Kammer austritt und für das primäre Schallereignis sorgt. Anschließend wird das pyrotechnische Material der ersten Kammer 66 gezündet, um durch das so erzeugte Gas den Gassack 38 zu entfalten.

Die in Figur 8 dargestellte Ausführungsform eines Gassack-Rückhaltesystems 36 entspricht im wesentlichen dem in Figur 7 gezeigten, wobei aber der Gasgenerator 40 als Druckgasspeicher oder Hybridspeicher ausgeführt ist. Das den Zünder 72 umgebende pyrotechnische Material dient deshalb zum Öffnen des Gasgeneratorgehäuses. Jedoch sind die Zünder 70, 72 über ein im Inneren des Gasgenerators angeordnetes Zündverzögerungselement 63 miteinander verbunden, so daß die Steuereinheit 44 nicht die beiden Zünder 70, 72 getrennt voneinander ansteuern muß. Da die Kammer 68 in das Innere des Gasgeneratorgehäuses, in dem unter Druck stehendes Gas gespeichert ist, ragt, wird die beim Zünden des in der Kammer 68 befindlichen pyrotechnischen Materials hervorgerufene Wärme über eine die Kammer 68 begrenzende Wandung dem Gas zugeführt. Dies hat den Hintergrund, daß die Leistungsentfaltung eines Druckgasspeichers oder Hybridspeichers über den Temperaturbereich von -35°C bis etwa 85°C konstant sein sollte. Da bei extrem tiefen Temperaturen, insbesondere bei Temperaturen unter dem Gefrierpunkt, die Leistung des Gasgenerators abfällt, kann durch das Zünden des in der Kammer 68 befindlichen pyrotechnischen Materials das Gas angewärmt werden. Um jedoch zu vermeiden, daß bereits heißes Gas noch zusätzlich erwärmt wird, kann die Steuereinheit 44 mit einem Temperatursensor verbunden sein, der die Temperatur des Gases im Inneren des Gasgenerators 61 erfaßt. Unterschreitet die Temperatur des Gases eine vorbestimmte Grenztemperatur, z.B. 0°C, wird im Rückhaltefall der Zünder 70 aktiviert. Ist das Vorwärmen des Gases jedoch nicht mehr nötig, da die Temperatur des Gases die Grenztemperatur überschreitet, wird eine zweite, außerhalb des Gasgenerators 61 gelegene Schallquelle 84 aktiviert.

Die Vorrichtung 10 und die in den verschiedenen Figuren gezeigten Gassack-Rückhaltesysteme eignen sich nicht nur zum Einbau in ein Lenkrad oder in das Armaturenbrett. Da gerade bei Kopf-Gassack-Rückhaltesystemen und bei Seiten-Gassack-Rückhaltesystemen die Gasgeneratoren die Gassäcke extrem schnell entfalten müssen, werden beim Ausströmen des Gases aus dem Gasgenerator Schallereignisse von hoher Frequenz und mit höheren Schalldruckpegeln hervorgerufen, als dies bei einem im Lenkrad oder im Armaturenbrett untergebrachten Gasgenerator der Fall ist.

## Patentansprüche

1. Vorrichtung zur Vermeidung von Gehörschäden, die durch die Auslösung von Fahrzeuginsassen-Rückhaltesystemen entstehen können, mit
einer Schallquelle (12) zum Hervorrufen eines primären Schallereignisses, das einen nicht gehörschädigenden Schalldruckpegel aufweist, der aber zur Auslösung des akustischen Reflexes des menschlichen Ohres ausreichend hoch ist, und
einer Auslösesteuerung (14; 42) für die Schallquelle (12),
wobei die Auslösesteuerung (14; 42) die Schallquelle (12) im Rückhaltefall so ansteuert, daß diese das primäre Schallereignis zeitlich kurz vor dem Auftreten eines sekundären Schallereignisses hervorruft, welches bei der Auslösung des Rückhaltesystems auftritt und einen gehörgefährdenden Schalldruckpegel aufweist, wobei der Zeitabstand zwischen den Schallereignissen einerseits und der Schalldruckpegel des primären Schallereignisses andererseits so bemessen ist, daß einer Gehörschädigung als Folge des sekundären Schallereignisses durch den akustischen Reflex vorgebeugt wird.

2. Vorrichtung nach Anspruch 1, **dadurch gekennzeichnet, daß** die Schallquelle (12) ein primäres Schallereignis mit einem Schalldruckpegel im Bereich von etwa 70 bis etwa 140 dB hervorruft.

3. Vorrichtung nach Anspruch 1, **dadurch gekennzeichnet, daß** die Schallquelle (12) ein primäres Schallereignis mit einem Schalldruckpegel von mindestens etwa 100 dB hervorruft.

4. Vorrichtung nach einem der vorstehenden Ansprüche, **dadurch gekennzeichnet, daß** das primäre Schallereignis etwa 0,5 bis etwa 30 ms vor dem sekundären Schallereignis beginnt.

5. Vorrichtung nach einem der Ansprüche 1 bis 3, **dadurch gekennzeichnet, daß** das primäre Schallereignis etwa 5 bis etwa 15 ms vor dem sekundären Schallereignis beginnt.

6. Vorrichtung nach Anspruch 1, **dadurch gekennzeichnet, daß** die Schallquelle (12) ein Schallereignis mit einem Frequenzspektrum im Bereich von etwa 500 bis etwa 8000 Hz hervorruft.

7. Vorrichtung nach einem der Ansprüche 1 bis 5, **dadurch gekennzeichnet, daß** die Schallquelle (12) ein Schallereignis mit einem Frequenzspektrum im Bereich von etwa 2000 bis etwa 4000 Hz hervorruft.

8. Vorrichtung nach einem der Ansprüche 1 bis 5, **dadurch gekennzeichnet, daß** die Schallquelle (12) ein Schallereignis mit einer Frequenz von etwa 3500 Hz hervorruft.

9. Vorrichtung nach einem der vorstehenden Ansprüche, **dadurch gekennzeichnet, daß** das primäre Schallereignis maximal etwa 2 ms andauert.

10. Vorrichtung nach einem der vorstehenden Ansprüche, **dadurch gekennzeichnet, daß** die Schallquelle (12) einen Energiespeicher umfaßt, dessen Energie schlagartig freigesetzt werden kann, wobei durch die Energiefreisetzung das primäre Schallereignis hervorgerufen wird.

11. Vorrichtung nach Anspruch 10, **dadurch gekennzeichnet, daß** der Energiespeicher pyrotechnisches Material (24) enthält, dessen Zündung das primäre Schallereignis bewirkt.

12. Vorrichtung nach Anspruch 10, **dadurch gekennzeichnet, daß** der Energiespeicher als Druckgasspeicher ausgebildet ist.

13. Vorrichtung nach einem der Ansprüche 1 bis 9, **dadurch gekennzeichnet, daß** die Schallquelle (12) einen Lautsprecher (20; 22) umfaßt.

14. Vorrichtung nach Anspruch 13, **dadurch gekennzeichnet, daß** der Lautsprecher ein piezoelektrischer Lautsprecher (22) ist.

15. Vorrichtung nach einem der vorstehenden Ansprüche, **dadurch gekennzeichnet, daß** die Auslösesteuerung (14; 42) einen Unfallsensor (16, 16a, 16b, 16c; 46; 56) umfaßt, auf dessen Signal im Rückhaltefall hin das primäre Schallereignis hervorgerufen wird.

16. Vorrichtung nach Anspruch 15, **dadurch gekennzeichnet, daß** die Auslösesteuerung (14; 42) zusammen mit ihrem Unfallsensor (16c) einen nicht mehr vermeidbaren Unfall feststellen kann.

17. Vorrichtung nach Anspruch 16, **dadurch gekennzeichnet, daß** der Unfallsensor ein Abstandssensor (16c) ist und daß der Abstand eines Objekts zum Fahrzeug ermittelt werden kann.

18. Vorrichtung nach Anspruch 15, **dadurch gekennzeichnet, daß** der Unfallsensor ein taktiler Sensor (16b) ist, der auf eine Deformation des Fahrzeugs hin ein Signal erzeugt.

19. Vorrichtung nach Anspruch 15, **dadurch gekennzeichnet, daß** der Unfallsensor ein Verzögerungssensor (16a; 46; 56) zur Ermittlung der Fahrzeugverzögerung ist.

20. Vorrichtung nach einem der Ansprüche 15 bis 19, **dadurch gekennzeichnet, daß** die Auslösesteuerung (14; 42) eine Steuereinheit (18; 44; 58) umfaßt, die mit dem Unfallsensor (16; 46; 56) verbunden ist und nach Erhalt eines Signals vom Unfallsensor (16; 46; 56) ein Signal zum Auslösen des primären Schallereignisses an die Schallquelle (12) abgibt.

21. Vorrichtung nach einem der Ansprüche 15 bis 20, **dadurch gekennzeichnet, daß** sie mit dem Fahrzeuginsassen-Rückhaltesystem gekoppelt und ein gemeinsamer Unfallsensor (46; 56) für die Vorrichtung (10) und das Fahrzeuginsassen-Rückhaltesystem vorgesehen ist.

22. Vorrichtung nach einem der Ansprüche 20 bis 21, **dadurch gekennzeichnet, daß** eine gemeinsame, mit dem Unfallsensor (46) verbundene Steuereinheit (44) für die Vorrichtung (10) und das Fahrzeuginsassen-Rückhaltesystem vorgesehen ist, die die zeitliche Aufeinanderfolge des primären und des sekundären Schallereignisses steuert.

23. Gassack-Rückhaltesystem für Fahrzeuginsassen, mit einem Gassack (38), einem Gasgenerator (40; 61) und einer Auslösesteuerung (42), die einen Unfallsensor (46) und eine Steuereinheit (44) umfaßt, **gekennzeichnet durch** eine in das Gassack-Rückhaltesystem (36) integrierte Vorrichtung (10) nach einem der vorstehenden Ansprüche.

24. Gassack-Rückhaltesystem nach Anspruch 23, **dadurch gekennzeichnet, daß** eine gemeinsame Auslösesteuerung (42) zur Aktivierung des Gasgenerators (40; 61) und zur Auslösung des primären Schallereignisses vorgesehen ist.

25. Gassack-Rückhaltesystem nach Anspruch 24, **dadurch gekennzeichnet, daß** der Gasgenerator (40; 61) einen Zünder (72) aufweist und daß ein Zündverzögerungselement (63) zwischen dem Zünder (72) und der Schallquelle (12) vorgesehen ist, um das zur Schallquelle (12) gelangende Signal zur Auslösung des primären Schallereignisses mit einer vorbestimmten Verzögerung zum Zünder (72) weiterzuleiten.

26. Gassack-Rückhaltesystem nach einem der Ansprüche 23 bis 25, **dadurch gekennzeichnet, daß** es in Modulbauweise ausgeführt ist und daß die Schallquelle (12) einen Energiespeicher (68) umfaßt, dessen Energie schlagartig freigesetzt werden kann, um für das primäre Schallereignis zu sorgen, und daß wenigstens der Energiespeicher (68) in das Gassack-Modul integriert ist.

27. Gassack-Rückhaltesystem nach einem der Ansprüche 23 bis 26, **dadurch gekennzeichnet, daß** wenigstens der Energiespeicher (68) in den Gasgenerator (61) des Gassack-Rückhaltesystems (36) integriert ist.

28. Gassack-Rückhaltesystem nach einem der Ansprüche 23 bis 27, **dadurch gekennzeichnet, daß** das primäre Schallereignis durch Zünden einer ersten, pyrotechnisches Material enthaltenden Schallquelle (68) hervorgerufen wird und daß die beim Zünden des pyrotechnischen Materials frei werdende Wärmeenergie zur Erwärmung des Gasgenerators (61) in diesen geleitet wird.

29. Gassack-Rückhaltesystem nach Anspruch 28, **dadurch gekennzeichnet, daß** die erste Schallquelle (68) nur dann aktiviert wird, wenn die Temperatur des Gasgenerators (61) eine bestimmte Grenztemperatur unterschreitet, und daß eine zweite Schallquelle (84) vorgesehen ist, die nur bei Überschreiten der Grenztemperatur zum Hervorrufen des primären Schallereignisses aktiviert wird.

30. Gassack-Rückhaltesystem nach einem der Ansprüche 23 bis 29, **dadurch gekennzeichnet, daß** das primäre Schallereignis durch Zünden eines pyrotechnischen Materials hervorgerufen wird und daß das dabei erzeugte Gas in eine Positioniereinrichtung (82) eingeleitet wird, die eine schnellere Entfaltung des Gassacks (38) vorbereitet.

31. Gassack-Rückhaltesystem nach einem der Ansprüche 23 bis 27, **dadurch gekennzeichnet, daß** das erste Schallereignis durch Zünden eines, einem Gurtstraffersystem (48) zugeordneten Gasgenerators hervorgerufen wird.

32. Verfahren zur Vermeidung von Gehörschäden, die durch die Auslösung von Fahrzeuginsassen-Rückhaltesystemen entstehen können, **dadurch gekennzeichnet, daß** vor dem Auslösen des Fahrzeuginsassen-Rückhaltesystems ein primäres Schallereigneis erzeugt wird, das einen nicht gehörschädigenden Schalldruckpegel aufweist, der zur Auslösung des akustischen Reflexes des menschlichen Ohres ausreichend hoch ist, wobei der Zeitabstand zwischen dem primären Schallereignis und einem sekundären Schallereignis, das bei Auslösung des Rückhaltesystems auftritt und einen gehörgefährdenden Schalldruckpegel aufweist, so kurz ist, daß einer Gehörschädigung als Folge des sekundären Schallereignisses durch den akustischen Reflex vorgebeugt wird.

33. Verfahren nach Anspruch 32, **dadurch gekennzeichnet, daß** das primäre Schallereignis einen Schalldruckpegel im Bereich von etwa 70 bis etwa 140 dB hat.

34. Verfahren nach Anspruch 32, **dadurch gekennzeichnet, daß** das primäre Schallereignis einen Schalldruckpegel von mindestens etwa 100 dB hat.

35. Verfahren nach einem der Ansprüche 32 bis 34, **dadurch gekennzeichnet, daß** das primäre Schallereignis etwa 0,5 bis etwa 30 ms vor dem sekundären Schallereignis beginnt.

36. Verfahren nach einem der Ansprüche 32 bis 34, **dadurch gekennzeichnet, daß** das primäre Schallereignis etwa 5 bis etwa 15 ms vor dem sekundären Schallereignis beginnt.

37. Verfahren- nach Anspruch 32, **dadurch gekennzeichnet, daß** das primäre Schallereignis in einem Frequenzspektrum im Bereich von etwa 500 bis etwa 8000 Hz liegt.

38. Verfahren nach einem der Ansprüche 32 bis 36, **dadurch gekennzeichnet, daß** das primäre Schallereignis in einem Frequenzspektrum im Bereich von etwa 2000 bis etwa 4000 Hz liegt.

39. Verfahren nach einem der Ansprüche 32 bis 36, **dadurch gekennzeichnet, daß** das primäre Schallereignis eine Frequenz von etwa 3500 Hz hat.

40. Verfahren nach einem der Ansprüche 32 bis 39, **dadurch gekennzeichnet, daß** das primäre Schallereignis maximal etwa 2 ms andauert.

## Claims

1. A device for preventing damage to hearing which may result from activation of vehicle occupant restraint systems, including
a source of sound (12) for producing a primary sound event having a sound pressure level non-injurious to hearing, which, however, is sufficient to trigger an acoustic reflex of the human ear, and
an activation control (14; 42) for the source of sound (12),
the activation control (14; 42) triggering the source of sound (12) in restraint action such that it produces the primary sound event in time shortly before the occurrence of a secondary sound event which occurs on activation of the restraint system and features a sound pressure level injurious to hearing, the time interval between the sound events, on the one hand, and the sound pressure level of the primary sound event, on the other, being dimensioned such that damage to hearing as a result of the secondary sound event is prevented by the acoustic reflex.

2. The device as set forth in claim 1, **characterized in that** the source of sound (12) produces a primary sound event with a sound pressure level in the range of approximately 70 to approximately 140 dB.

3. The device as set forth in claim 1, **characterized in that** the source of sound (12) produces a primary sound event with a sound pressure level of at least approximately 100 dB.

4. The device as set forth in any of the preceding claims, **characterized in that** the primary sound event commences roughly 0.5 to roughly 30 ms prior to the secondary sound event.

5. The device as set forth in any of the claims 1 to 3, **characterized in that** the primary sound event commences roughly 5 to roughly 15 ms prior to the secondary sound event.

6. The device as set forth in claim 1, **characterized in that** the source of sound (12) produces a sound event with a frequency spectrum in the range of approximately 500 to approximately 8000 Hz.

7. The device as set forth in any of the claims 1 to 5, **characterized in that** the source of sound (12) produces a sound event with a frequency spectrum in the range of approximately 2000 to approximately 4000 Hz.

8. The device as set forth in any of the claims 1 to 5, **characterized in that** the source of sound (12) produces a sound event with a frequency of approximately 3500 Hz.

9. The device as set forth in any of the preceding claims, **characterized in that** the primary sound event lasts approximately 2 ms at the most.

10. The device as set forth in any of the preceding claims, **characterized in that** the source of sound (12) comprises an energy storage, the energy of which can be abruptly released, as a result of the release the primary sound event being produced.

11. The device as set forth in claim 10, **characterized in that** the energy storage contains pyrotechnic material (24), the ignition of which produces the primary sound event.

12. The device as set forth in claim 10, **characterized in that** the energy storage is configured as a compressed gas storage.

13. The device as set forth in any of the claims 1 to 9, **characterized in that** the source of sound (12) comprises a loudspeaker (20; 22).

14. The device as set forth in claim 13, **characterized in that** the loudspeaker is a piezoelectric loudspeaker (22).

15. The device as set forth in any of the preceding claims, **characterized in that** the activation control (14; 42) comprises a crash sensor (16, 16a, 16b, 16c; 46; 56), in response to the signal of which the primary sound event is produced in the case of restraint.

16. The device as set forth in claim 15, **characterized in that** the activation control (14; 42) together with its crash sensor (16c) is able to determine a collision which is no longer avoidable.

17. The device as set forth in claim 16, **characterized in that** the crash sensor is a distance sensor (16c) and that the distance of an object to the vehicle can be sensed.

18. The device as set forth in claim 15, **characterized in that** the crash sensor is a tactile sensor (16b) which generates a signal in response to a deformation of the vehicle.

19. The device as set forth in claim 15, **characterized in that** the crash sensor is a delay sensor (16a; 46; 56) for sensing the vehicle deceleration.

20. The device as set forth in any of the claims 15 to 19, **characterized in that** the activation control (14; 42) comprises a control unit (18; 44; 58) which is connected to the crash sensor (16; 46; 56) and outputs a signal for triggering the primary sound event to the source of sound (12) on receiving a signal from the crash sensor (16; 46; 56).

21. The device as set forth in any of the claims 15 to 20, **characterized in that** it is coupled to the vehicle occupant restraint system and that a crash sensor (46; 56) is provided in common for the device (10) and the vehicle occupant restraint system.

22. The device as set forth in any of the claims 20 to 21, **characterized in that** a control unit (44) connected to the crash sensor (46) is provided in common for the device (10) and the vehicle occupant restraint system which controls the sequence in time of the primary sound event and the secondary sound event.

23. A gas bag restraint system for vehicle occupants, comprising a gas bag (38), a gas generator (40; 61) and an activation control (42) comprising a crash sensor (46) and a control unit (44), **characterized by** a device (10) as set forth in any of the preceding claims and integrated in the gas bag restraint system (36).

24. The gas bag restraint system as set forth in claim 23, **characterized in that** a common activation control (42) for activating the gas generator (40; 61) and for triggering the primary sound event is provided.

25. The gas bag restraint system as set forth in claim 24, **characterized in that** the gas generator (40; 61) comprises an igniter (72) and that an ignition delay element (63) is provided between the igniter (72) and the source of sound (12) for passing on the signal, arriving at the source of sound (12) for triggering the primary sound event, to the igniter (72) with a predetermined delay.

26. The gas bag restraint system as set forth in any of the claims 23 to 25, **characterized by** it being configured as a modular system and in that the source of sound (12) comprises an energy storage (68), the energy of which can be abruptly released to provide for the primary sound event and in that at least the energy storage (68) is integrated in the gas bag module.

27. The gas bag restraint system as set forth in any of the claims 23 to 26, **characterized in that** at least the energy storage (68) is integrated in the gas generator (61) of the gas bag restraint system (36).

28. The gas bag restraint system as set forth in any of the claims 23 to 27, **characterized in that** the primary sound event is produced by ignition of a first source of sound (68) containing pyrotechnic material and **in that** the heat energy liberated on ignition of the pyrotechnic material is directed into the gas generator (61) to heat it up.

29. The gas bag restraint system as set forth in claim 28, **characterized in that** the first source of sound (68) is only activated when the temperature of the gas generator (61) is below a predetermined critical temperature and **in that** a second source of sound (84) is provided which is only activated to produce the primary sound event when the critical temperature is exceeded.

30. The gas bag restraint system as set forth in any of the claims 23 to 29, **characterized in that** the primary sound event is produced by ignition of a pyrotechnic material and **in that** the gas generated thereby is introduced into a positioning means (82) which prepares a more speedy deployment of the gas bag (38).

31. The gas bag restraint system as set forth in any of the claims 23 to 27, **characterized in that** the primary sound event is produced by ignition of a gas generator assigned to a belt tensioning system (48).

32. A method for preventing damage to hearing which may result from activation of vehicle occupant restraint systems, **characterized in that** prior to activation of the vehicle occupant restraint system a primary sound event is produced having a sound pressure level non-injurious to hearing and sufficient to trigger an acoustic reflex of the human ear, the time interval between the primary sound event and a secondary sound event which occurs on activation of the restraint system and features a sound pressure level injurious to hearing being so short that damage to hearing as a result of the secondary sound event is prevented by the acoustic reflex.

33. The method as set forth in claim 32, **characterized in that** the primary sound event has a sound pressure level in the range of approximately 70 to approximately 140 dB.

34. The method as set forth in claim 32, **characterized in that** the primary sound event has a sound pressure level of at least approximately 100 dB.

35. The method as set forth in any of the claims 32 to 34, **characterized in that** the primary sound event commences roughly 0.5 to roughly 30 ms prior to the secondary sound event.

36. The method as set forth in any of the claims 32 to 34, **characterized in that** the primary sound event commences roughly 5 to roughly 15 ms prior to the secondary sound event.

37. The method as set forth in claim 32, **characterized in that** the primary sound event is in a frequency spectrum in the range of approximately 500 to approximately 8000 Hz.

38. The method as set forth in any of the claims 32 to 36, **characterized in that** the primary sound event is in a frequency spectrum in the range of approximately 2000 to approximately 4000 Hz.

39. The method as set forth in any of the claims 32 to 36, **characterized in that** the primary sound event has a frequency of approximately 3500 Hz.

40. The method as set forth in any of the claims 32 to 39, **characterized in that** the primary sound event lasts approximately 2 ms at the most.

## Revendications

1. Dispositif pour éviter des atteintes auditives qui peuvent se produire lors du déclenchement de systèmes de retenue des occupants d'un véhicule, comportant
une source sonore (12) pour produire un évènement sonore primaire qui présente un niveau de pression sonore qui n'est pas nuisible à l'ouïe mais qui est suffisamment élevé pour déclencher le réflexe acoustique de l'oreille humaine, et
une commande de déclenchement (14; 42) pour la source sonore (12),
la commande de déclenchement (14 ; 42) pilotant, en cas de retenue, la source sonore (12) de telle sorte que celle-ci suscite l'évènement sonore primaire à temps, juste avant qu'intervienne un évènement sonore secondaire qui intervient au déclenchement du système de retenue et qui présente un niveau de pression sonore nuisible à l'ouïe, l'intervalle de temps entre les évènements sonores, d'une part, et le niveau de pression sonore du premier évènement sonore, d'autre part, étant dimensionnés de manière à prévenir, par le réflexe acoustique, une atteinte auditive résultant de l'évènement sonore secondaire.

2. Dispositif selon la revendication 1, **caractérisé en ce que** la source sonore (12) suscite un évènement sonore primaire avec un niveau de pression sonore dans la plage d'approximativement 70 à approximativement 140 dB.

3. Dispositif selon la revendication 1, **caractérisé en ce que** la source sonore (12) suscite un évènement sonore primaire avec un niveau de pression sonore dans la plage d'au moins approximativement 100 dB.

4. Dispositif selon l'une quelconque des revendications précédentes, **caractérisé en ce que** l'évènement sonore primaire commence approximativement 0,5 à approximativement 30 ms avant l'évènement sonore secondaire.

5. Dispositif selon l'une quelconque des revendications 1 à 3, **caractérisé en ce que** l'évènement sonore primaire commence approximativement 5 à approximativement 15 ms avant l'évènement sonore secondaire.

6. Dispositif selon la revendication 1, **caractérisé en ce que** la source sonore (12) suscite un évènement sonore avec un spectre de fréquence dans la plage d'approximativement 500 à approximativement 8000 Hz.

7. Dispositif selon l'une quelconque des revendications 1 à 5, **caractérisé en ce que** la source sonore (12) suscite un évènement sonore avec un spectre de fréquence dans la plage d'approximativement 2000 à approximativement 4000 Hz.

8. Dispositif selon l'une quelconque des revendications 1 à 5, **caractérisé en ce que** la source sonore (12) suscite un évènement sonore avec une fréquence d'approximativement 3500 Hz.

9. Dispositif selon l'une quelconque des revendications précédentes, **caractérisé en ce que** l'évènement sonore primaire dure au maximum approximativement 2 ms.

10. Dispositif selon l'une quelconque des revendications précédentes, **caractérisé en ce que** la source sonore (12) comprend un réservoir d'énergie dont l'énergie peut être libérée abruptement, l'évènement sonore primaire étant suscité par la libération d'énergie.

11. Dispositif selon la revendication 10, **caractérisé en ce que** le réservoir d'énergie contient un matériau pyrotechnique (24) dont l'allumage produit l'évènement sonore primaire.

12. Dispositif selon la revendication 10, **caractérisé en ce que** le réservoir d'énergie est réalisé sous forme de réservoir de gaz comprimé.

13. Dispositif selon l'une quelconque des revendications 1 à 9, **caractérisé en ce que** la source sonore (12) comprend un haut-parleur (20 ; 22).

14. Dispositif selon la revendications 13, **caractérisé en ce que** le haut-parleur est un haut-parleur piézoélectrique (22).

15. Dispositif selon l'une quelconque des revendications précédentes, **caractérisé en ce que** la commande de déclenchement (14; 42) comprend un détecteur d'accident (16, 16a, 16b, 16c; 46; 56) en réponse au signal duquel l'évènement sonore primaire est suscité en cas de retenue

16. Dispositif selon la revendication 15, **caractérisé en ce que** la commande de déclenchement (14, ; 42) peut, conjointement avec son détecteur d'accident (16c), déterminer un accident qui n'est plus évitable.

17. Dispositif selon la revendication 16, **caractérisé en ce que** le détecteur d'accident est un détecteur de distance (16c) et **en ce que** la distance d'un objet par rapport au véhicule peut être détectée.

18. Dispositif selon la revendication 15, **caractérisé en ce que** le détecteur d'accident est un détecteur tactile (16b) qui engendre un signal en réponse à une déformation du véhicule.

19. Dispositif selon la revendication 15, **caractérisé en ce que** le détecteur d'accident est un détecteur de décélération (16a ; 46 ; 56) pour détecter la décélération du véhicule.

20. Dispositif selon l'une quelconque des revendications 15 à 19, **caractérisé en ce que** la commande de déclenchement (14 ; 42) comprend une unité de commande (18 ; 44 ; 58) qui est reliée au détecteur d'accident (16 ; 46 ; 56) et qui, après avoir reçu un signal du détecteur d'accident (16 ; 46; 56), fournit un signal à la source sonore (12) pour déclencher l'évènement sonore primaire.

21. Dispositif selon l'une quelconque des revendications 15 à 20, **caractérisé en ce qu'**il est accouplé au système de retenue des occupants du véhicule et **en ce qu'**un détecteur d'accident commun (46; 56) est prévu pour le dispositif (10) et pour le système de retenue des occupants du véhicule.

22. Dispositif selon l'une quelconque des revendications 20 à 21, **caractérisé en ce qu'**il est prévu une unité de commande (44) commune, reliée au détecteur d'accident (46), pour le dispositif (10) et pour le système de retenue des occupants du véhicule, ladite unité commandant la succession dans le temps des évènements sonores primaire et secondaire.

23. Système de retenue par coussin à gaz pour occupants d'un véhicule, comportant un coussin à gaz (38), un générateur de gaz (40 ; 61) et une commande de déclenchement (42) qui comprend un détecteur d'accident (46) et une unité de commande (44), **caractérisé par** un dispositif (10) selon l'une des revendications précédentes, lequel est intégré dans le système de retenue par coussin à gaz (36).

24. Système de retenue par coussin à gaz selon la revendication 23, **caractérisé en ce qu'**une commande de déclenchement (42) commune est prévue pour activer le générateur de gaz (40; 61) et pour déclencher l'évènement sonore primaire.

25. Système de retenue par coussin à gaz selon la revendication 24, **caractérisé en ce que** le générateur de gaz (40; 61) présente un allumeur (72) et **en ce qu'**un élément de retardement de l'allumage (63) est prévu entre l'allumeur (72) et la source sonore (12) pour transmettre à l'allumeur (72) avec un retard prédéterminé le signal arrivant à la source sonore (12) pour déclencher l'évènement sonore primaire.

26. Système de retenue par coussin à gaz selon l'une quelconque des revendications 23 à 25, **caractérisé en ce qu'**il est réalisé sous forme modulaire et **en ce que** la source sonore (12) comprend un réservoir d'énergie (68) dont l'énergie peut être libérée abruptement pour assurer l'évènement sonore primaire, et **en ce que** le réservoir d'énergie (68) est intégré dans le module de coussin à gaz.

27. Système de retenue par coussin à gaz selon l'une quelconque des revendications 23 à 26, **caractérisé en ce qu'**au moins le réservoir d'énergie (68) est intégré dans le générateur de gaz (61) du système de retenue par coussin à gaz (36).

28. Système de retenue par coussin à gaz selon l'une quelconque des revendications 23 à 27, **caractérisé en ce que** l'évènement sonore primaire est suscité par l'allumage d'une première source sonore (68) contenant du matériau pyrotechnique, et **en ce que** l'énergie libérée au cours de l'allumage du matériau pyrotechnique est amenée dans le générateur de gaz (61) pour chauffer celui-ci.

29. Système de retenue par coussin à gaz selon la revendication 28, **caractérisé en ce que** la première source sonore (68) n'est activée que lorsque la température du générateur de gaz (61) est inférieure à une température limite déterminée, et **en ce qu'**il est prévu une deuxième source sonore (84) qui n'est activée pour susciter l'évènement sonore primaire qu'en cas de dépassement de la température limite.

30. Système de retenue par coussin à gaz selon l'une quelconque des revendications 23 à 29, **caractérisé en ce que** l'évènement sonore primaire est suscité par l'allumage d'un matériau pyrotechnique et **en ce que** le gaz par-là engendré est introduit à un moyen de positionnement (82) qui prépare un déploiement plus rapide du coussin à gaz (38).

31. Système de retenue par coussin à gaz selon l'une quelconque des revendications 23 à 27, **caractérisé en ce** l'évènement sonore primaire est suscité par l'allumage d'un générateur de gaz associé à un système tensionneur de ceinture (48).

32. Procédé de prévention d'atteintes auditives qui peuvent se produire lors du déclenchement de systèmes de retenue des occupants d'un véhicule, **caractérisé en ce qu'**avant le déclenchement du système de retenue des occupants du véhicule il est engendré un évènement sonore primaire qui présente un niveau de pression sonore qui n'est pas nuisible à l'ouïe, qui est suffisant élevé pour déclencher le réflexe acoustique de l'oreille humaine, l'intervalle de temps entre l'évènement sonore primaire et un évènement sonore secondaire, qui intervient au déclenchement du système de retenue et qui présente un niveau de pression acoustique nuisible à l'ouïe, est si court qu'il prévient, par le réflexe acoustique, une atteinte auditive résultant de l'évènement sonore secondaire.

33. Procédé selon la revendication 32, **caractérisé en ce que** l'évènement sonore primaire a un niveau de pression sonore dans la plage d'approximativement 70 à approximativement 140 dB.

34. Procédé selon la revendication 32, **caractérisé en ce que** l'évènement sonore primaire a un niveau de pression sonore au moins approximativement 100 dB.

35. Procédé selon l'une quelconque des revendications 32 à 34, **caractérisé en ce que** l'évènement sonore primaire commence approximativement 0,5 à approximativement 30 ms avant l'évènement sonore secondaire.

36. Dispositif selon l'une quelconque des revendications 32 à 34, **caractérisé en ce que** l'évènement sonore primaire commence approximativement 5 à approximativement 15 ms avant l'évènement sonore secondaire.

37. Dispositif selon la revendication 32, **caractérisé en ce que** l'évènement sonore primaire se situe dans un spectre de fréquence dans la plage d'approximativement 500 à approximativement 8000 Hz.

38. Dispositif selon l'une quelconque des revendications 32 à 36, **caractérisé en ce que** l'événement sonore primaire se situe dans un spectre de fréquence dans la plage d'approximativement 2000 à approximativement 4000 Hz.

39. Dispositif selon l'une quelconque des revendications 32 à 36, **caractérisé en ce que** l'évènement sonore primaire a une fréquence d'approximativement 3500 Hz.

40. Dispositif selon l'une quelconque des revendications 32 à 39, **caractérisé en ce que** l'évènement sonore primaire dure au maximum approximativement 2 ms.
